# FASCICULE DE BREVET EUROPEEN

(11) **EP 0 722 152 B1**
(45) Date de publication et mention de la délivrance du brevet: **13.10.1999**
(21) Numéro de dépôt: 96400041.8
(22) Date de dépôt: 08.01.1996
(51) Int. Cl.: G07C 13/00, G09B 7/02

(54) **Procédé de transmission d'informations protegees entre un utilisateur et un ordinateur par un reseau de telecommunications**
Verfahren zur Übertragung von Schutzdaten zwischen einem Benutzer und einem Rechner mit einem Kommunikationsnetzwerk
Secure information transmitting process between a user and a computer using a telecommunication network

(30) Priorité: 10.01.1995 FR 9500203
(43) Date de publication de la demande: 17.07.1996
(73) Titulaire: PROSODIE, 92100 Boulogne-Billancourt (FR)
(72) Inventeur: Bernard, Alain, F-75015 Paris (FR)
(74) Mandataire: Dubois-Chabert, Guy

(56) Documents cités:
- WO-A-92/03805

## Description

### Domaine technique

La présente invention a pour objet un procédé de transmission d'informations protégées entre un utilisateur et un ordinateur par un réseau de télécommunications. Elle trouve une application dans le vote à distance, le jeu, l'accès à divers services informatiques, etc...

### Etat de la technique antérieure

Pour transmettre une information de façon protégée entre un utilisateur et un ordinateur, par un réseau de télécommunications, on connaît diverses techniques, notamment celles qui nécessitent un appareil de chiffrement (WO-A-92/03805) et celles qui nécessitent un calcul que l'utilisateur effectue, soit manuellement, soit avec une petite calculatrice.

Si elles donnent satisfaction a certains égards, ces techniques présentent cependant l'inconvénient de ne pas être adaptées au grand public.

Le but de la présente invention est justement de remédier à cet inconvénient en proposant un procédé accessible à tout un chacun, sans qu'il soit besoin de posséder des connaissances particulières ou de disposer d'un matériel sophistiqué.

### Exposé de l'invention

A cette fin, l'invention propose un procédé qui est caractérisé par le fait qu'il comprend les opérations suivantes :
- une autorité délivre à un utilisateur un support sur lequel est inscrit un numéro de série et numéro secret, le numéro secret au moins étant masqué par un moyen à démasquage irréversible, le numéro secret étant composé d'une séquence de caractères dont un au moins est manquant ou remplacé par un symbole spécifique tel que case vide, étoile, carré, etc..., un caractère manquant occupant un emplacement déterminé dans la séquence, le numéro de série de chaque support permettant de retrouver le numéro secret et les emplacements du ou des caractère(s) manquant(s) par une relation secrète connue de l'autorité et de l'ordinateur,
- l'utilisateur démasque le numéro secret de son support, le complète en inscrivant dans le ou les emplacement(s) de caractère(s) manquant(s) (s) un ou des caractère (s) de son choix, ce ou ces caractère(s) constituant l'information à transmettre,
- à l'aide d'un réseau de télécommunications le reliant à un ordinateur, l'utilisateur transmet à cet ordinateur le numéro de série de son support et le numéro secret ainsi complété,
- l'ordinateur, à partir du numéro de série qu'il reçoit et à l'aide de ladite relation qu'il connaît, retrouve le numéro secret associé au numéro de série, vérifie que la séquence secrète qu'il a reçue a bien été émise par le titulaire du support portant le numéro de série reçu, détermine le ou les emplacement(s) dans le numéro secret du (des) caractère(s) (s) manquant(s), lit le ou les caractère(s) figurant dans ce ou ces emplacement(s), en déduit l'information transmise, et agit en fonction de cette information.

L'action finale entreprise par l'ordinateur peut être un enregistrement dans une mémoire, une comptabilisation, une autorisation d'accès, etc...

De préférence, le numéro de série et/ou le numéro secret sont des séquences de caractères littéraux et/ou numériques compatibles avec les caractéristiques du terminal dont dispose l'utilisateur.

De préférence encore, le moyen de masquage irréversible est un film à gratter.

De préférence encore, le caractère manquant est un chiffre compris entre 0 et 9. Dans ce cas, l'information représentée par le chiffre choisi correspond à une entité prise parmi 10 entités.

Le chiffre compris entre 0 et 9 peut désigner une personne parmi 10, l'information transmise étant alors un vote. L'une des applications privilégiée de l'invention est donc le vote à distance. Dans ce cas, le support prend la forme d'un bulletin qui est distribué à chaque électeur après vérification de sa carte électorale. Chaque électeur peut alors être identifié par le numéro de série du bulletin qui lui est attribué. Dans cette application, l'autorité est un organisme habilité à organiser des élections.

### Brève description des dessins

- la figure 1 représente schématiquement un réseau de télécommunications pouvant être utilisé pour la mise en oeuvre du procédé de l'invention ;
- la figure 2 montre un exemple de support sous forme de carte.

### Description détaillée d'un mode de réalisation

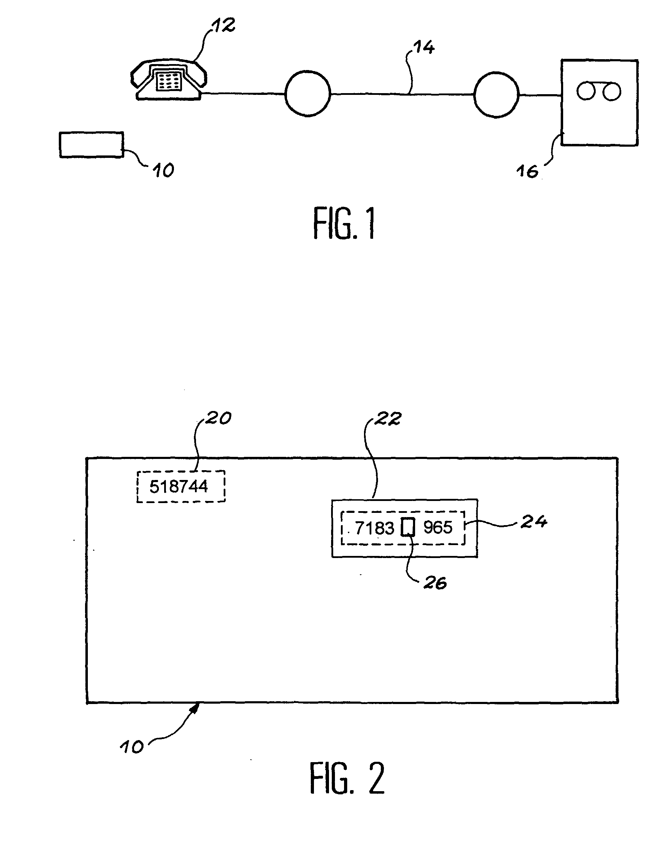

Conformément à l'exemple de la figure 1, un utilisateur qui a reçu une carte 10, veut transmettre une information en utilisant un téléphone à touches 12 en utilisant un réseau téléphonique 14 le reliant à un ordinateur 16.

Dans l'exemple qui va être décrit, l'utilisateur cherche à transmettre un chiffre compris entre 0 et 9. Comme représenté sur la figure 2, l'utilisateur a reçu une carte 10 comprenant un numéro de série 20 ce numéro (518744 dans l'exemple illustré) et un nombre secret assez long 24 (7183 965 dans l'exemple illustré) protégé contre la lecture par un film 22 susceptible d'être gratté ou par une enveloppe.

Ce nombre secret comporte une série de caractères mais l'un d'eux au moins, est par exemple, une case blanche 26.

A partir du numéro de série 20, l'ordinateur central 16 peut trouver le nombre secret 24 et la position de la case blanche 26. Les données nécessaires à ces opérations ont, par exemple, été stockées dans une table, ou peuvent être déduites du numéro de série 20 par un algorithme.

L'utilisateur fait alors son choix, matérialisé par un chiffre compris entre 0 et 9. Il gratte la protection 22 du numéro secret 24 et inscrit son choix dans la case blanche 26 ou à la place du symbole spécifique. Ensuite, il appelle l'ordinateur et tape le numéro de série 20, puis la totalité des chiffres du numéro secret 24, y compris le chiffre correspondant à son choix.

Le serveur vocal et les divers moyens qui sont dans la chaîne de télécommunications ne peuvent savoir quel est l'emplacement de la séquence qui correspond au choix de l'utilisateur. Par contre, l'ordinateur est capable de trouver, par le numéro de série, le chiffre qui a été ajouté à la séquence secrète. Il peut aussi vérifier que la séquence reçue a bien été émise par le possesseur de la carte identifiée par son numéro de série.

Dans une variante de l'invention, le numéro de série 20 est également protégé par une enveloppe ou par un film de grattage.

## Revendications

1. Procédé de transmission d'informations protégées entre un utilisateur et un ordinateur par un réseau de télécommunications, caractérisé par le fait qu'il comprend les opérations suivantes :
- une autorité délivre à un utilisateur un support (10) sur lequel est inscrit un numéro de série (20) et numéro secret (24), le numéro secret (24) au moins étant masqué par un moyen à démasquage irréversible (22), le numéro secret (24) étant composé d'une séquence de caractères dont un au moins (26) est manquant ou remplacé par un symbole spécifique, un caractère manquant (26) occupant un emplacement déterminé dans la séquence (24), le numéro de série (20) de chaque support (10) permettant de retrouver le numéro secret (24) et les emplacements (26) du ou des caractère(s) manquant(s) par une relation secrète connue de l'autorité et de l'ordinateur (16),
- l'utilisateur démasque le numéro secret (24) de son support (10), le complète en inscrivant dans le ou les emplacement(s) (26) où un caractère est manquant un ou des caractère(s) de son choix, ce ou ces caractère(s) constituant l'information à transmettre,
- à l'aide d'un réseau de télécommunications (14) le reliant à un ordinateur (16), l'utilisateur transmet à cet ordinateur (16) le numéro de série (20) de son support (10) et le numéro secret (24) ainsi complété,
- l'ordinateur (16), à partir du numéro de série (20) qu'il reçoit et à l'aide de ladite relation qu'il connaît, retrouve le numéro secret (24) associé au numéro de série (20), vérifie que la séquence secrète (24) qu'il a reçue a bien été émise par le titulaire du support (10) portant le numéro de série reçu (20), détermine le ou les emplacement(s) (26) dans le numéro secret (24) du (des) caractère(s) manquant(s), lit le ou les caractère(s) figurant dans ce ou ces emplacement(s) (26), en déduit l'information transmise, et agit en fonction de cette information.

2. Procédé selon la revendication 1, caractérisé par le fait que l'utilisateur transmet à l'ordinateur (16) le numéro de série (20) et le numéro secret complété (24) en utilisant le réseau téléphonique (14).

3. Procédé selon la revendication 1, caractérisé par le fait que le numéro de série (20) et/ou le numéro secret (24) sont des séquences de caractères littéraux et/ou numériques.

4. Procédé selon la revendication 1, caractérisé par le fait que le moyen de masquage irréversible (22) est un film à gratter.

5. Procédé selon la revendication 1, caractérisé par le fait que le caractère manquant (26) est un chiffre compris entre 0 et 9.

6. Procédé selon la revendica tion 5, caractérisé par le fait que l'information représentée par le chiffre choisi compris entre 0 et 9 correspond à une entité prise parmi 10 entités.

7. Procédé selon la revendication 6, caractérisé par le fait que le chiffre choisi compris entre 0 et 9 désigne une personne parmi 10, l'information transmise étant alors un vote.

8. Procédé selon l'une quelconque des revendications 1 à 7, caractérisé par le fait qu'on utilise des supports genre cartes ou bulletins.

## Patentansprüche

1. Verfahren zum Übertragen von Schutzdaten zwischen einem Benutzer und einem Computer mit einem Telekommunikationsnetzwerk,
**dadurch gekennzeichnet,**
daß es die folgenden Schritte umfaßt:
- eine Behörde liefert einem Benutzer einen Träger (10), auf dem eine Seriennummer (20) und eine Geheimzahl (24) eingetragen ist, wobei wenigstens die Seriennummer (24) maskiert ist durch ein irreversibles Demaskierungsmittel (22) und die Geheimzahl (24) durch eine Sequenz von Zeichen gebildet wird, von denen wenigstens eines (26) fehlt oder durch ein spezifisches Symbol ersetzt wird, wobei ein fehlendes Zeichen (26) einen bestimmten Platz in der Sequenz (24) einnimmt und die Seriennummer (20) jedes Trägers (10) ein Wiederfinden der Geheimzahl (24) und der Stellen (26) des oder der fehlenden Zeichen(s) durch eine Geheimrelation ermöglicht, die der Behörde und dem Computer (16) bekannt ist,
- der Benutzer demaskiert die Geheimzahl (24) seines Trägers (10), vervollständigt sie, indem er in die Stelle(n) (26), wo ein Zeichen fehlt, ein oder mehrere Zeichen seiner Wahl einträgt, wobei dieses oder diese Zeichen die zu übertragende Information bildet bzw. bilden,
- der Computer (16) findet aufgrund der Seriennummer (20), die er empfängt und mit Hilfe der genannten Relation, die er kennt, die der Seriennummer (20) zugeordnete Geheimzahl (24), überprüft, ob die Geheimsequenz (24), die er empfangen hat, auch wirklich durch den Inhaber des die Seriennummer (20) tragenden Trägers (10) gesendet wurde, bestimmt in der Geheimzahl (24) die Stelle(n) (26) des oder der fehlenden Zeichen(s), liest das oder die Zeichen (26), die an dieser oder diesen Stelle(n) (26) stehen, leitet daraus die übertragene Information ab und handelt in Abhänigkeit von dieser Information.

2. Verfahren nach Anspruch 1, dadurch gekennzeichnet, daß der Benutzer dem Computer (16) die Seriennummer (20) und die vollständige Geheimzahl (24) überträgt, indem er das Telefonnetz (14) benutzt.

3. Verfahren nach Anspruch 1, dadurch gekennzeichnet, daß die Seriennummer (20) und/oder die Geheimzahl (24) Sequenzen von Buchstaben- und/oder Zahlenzeichen sind.

4. Verfahren nach Anspruch 1, dadurch gekennzeichnet, daß das irreversible Demaskierungsmittel (22) ein Rubbelfilm ist.

5. Verfahren nach Anspruch 1, dadurch gekennzeichnet, daß das fehlende Zeichen (26) eine zwischen 0 und 9 enthaltene Zahl ist.

6. Verfahren nach Anspruch 5, dadurch gekennzeichnet, daß die Information, dargestellt durch die gewählte, zwischen 0 und 9 enthaltene Zahl, einer von 10 Einheiten entspricht.

7. Verfahren nach Anspruch 6, dadurch gekennzeichnet, daß die gewählte, zwischen 0 und 9 enthaltene Zahl eine von 10 Personen bezeichnet und die übertragene Information dann eine Stimme bzw. Wahlstimme ist.

8. Verfahren nach einem Ansprüche 1 bis 7, dadurch gekennzeichnet, daß man Träger des Typs Karten oder Zettel benutzt.

## Claims

1. Process for transmitting protected information between a user and a computer via a telecommunications network, characterized in that it comprises the following operations:
- an authority provides the user with a medium (10) on which is inscribed a serial number (20) and secret number (24), the secret number (24) at least being masked by an irreversibleunmasking means (22), the secret number (24) being composed of a sequence of characters of which one at least (26) is missing or replaced by a specific symbol, a missing character (26) occupying a specified location in the sequence (24), the serial number (20) of each medium (10) making it possible to retrieve the secret number (24) and the locations (26) of the missing character(s) via a secret relation known to the authority and to the computer (16),
- the user unmasks the secret number (24) of his medium (10), completes it by inscribing in the location(s) (26) where a character is missing one or more characters of his choice, this or these character(s) constituting the item of information to be transmitted,
- with the aid of a telecommunications network (14) linking him to a computer (16), the user transmits the serial number (20) of his medium (10) and the secret number (24) thus completed to this computer (16),
- the computer (16), on the basis of the serial number (20) which it receives and with the aid of the said relation which it knows, retrieves the secret number (24) associated with the serial number (20), verifies that the secret sequence (24) which it has received was indeed sent by the owner of the medium (10) bearing the serial number received (20), determines the location(s) (26) in the secret number (24) of the missing character(s), reads the character(s) figuring in this or these location(s) (26), deduces therefrom the item of information transmitted, and acts on the basis of this item of information.

2. Process according to Claim 1, characterized in that the user transmits the serial number (20) and the completed secret number (24) to the computer (16) using the telephonic network (14).

3. Process according to Claim 1, characterized in that the serial number (20) and/or the secret number (24) are sequences of literal and/or numerical characters.

4. Process according to Claim 1, characterized in that the irreversible-masking means (22) is a film to be scratched.

5. Process according to Claim 1, characterized in that the missing character (26) is a digit lying between 0 and 9.

6. Process according to Claim 5, characterized in that the item of the information represented by the chosen digit lying between 0 and 9 corresponds to an entity picked from among 10 entities.

7. Process according to Claim 6, characterized in that the chosen digit lying between 0 and 9 designates one person from among 10, the item of information transmitted then being a vote.

8. Process according to any one of Claims 1 to 7, characterized in that media of the card or ballot-paper kind are used.
